# EUROPÄISCHE PATENTANMELDUNG

(11) **EP 4 703 199 A1**
(43) Veröffentlichungstag der Anmeldung: **04.03.2026**
(21) Anmeldenummer: 25192388.4
(22) Anmeldetag: 29.07.2025
(51) Int. Cl.: B60N 2/34, B60N 2/30, B60N 2/22

(54) **FAHRZEUGSITZ**

(30) Priorität: 28.08.2024 DE 102024124567
(71) Anmelder: Hermann Schnierle GmbH, 86368 Gersthofen (DE)
(72) Erfinder: Schnierle, Martin, 86153 Augsburg (DE)
(74) Vertreter: Charrier Rapp & Liebau

(57) **Zusammenfassung**

Die Erfindung betrifft einen Fahrzeugsitz, der ein Sitzteil (2) mit einem auf einem Traggestell (15) angeordneten Sitzpolster (16) und eine an dem Traggestell (15) des Sitzteils (2) schwenkbar angeordnete Rückenlehne (3) mit einem Rückengestell (18, 19) und einem auf den Rückengestell (18, 19) angeordneten Rückenpolster (17) enthält. Erfindungsgemäß ist das Rückengestell (18, 19) der Rückenlehne (3) zwischen einer Sitzposition und einer horizontalen Liegeposition verschwenkbar an dem Traggestell (15) des Sitzteils (2) angelenkt und das Rückenpolster (17) der Rückenlehne (3) ist an dem Rückengestell (18, 19) gegenüber diesem über eine Linearführung (26, 27, 28) verschiebbar angeordnet.

## Beschreibung

Die Erfindung betrifft einen Fahrzeugsitz nach dem Oberbegriff des Anspruchs 1.

Fahrzeugsitze weisen üblicherweise ein mit einem Sitzpolster versehenes Sitzteil, eine an dem Sitzteil schwenkbar angeordnete Rückenlehne mit einem Rückenpolster und eine an der Rückenlehne angeordnete Kopfstütze auf. Es gibt auch bereits Fahrzeugsitze, die eine an der Vorderseite des Sitzteils klappbar angeordnete Fußstütze für eine zusätzliche Auflage der vorderen Beinteile aufweisen. Durch eine derartige zusätzliche Fußstütze können die vorderen Beinteile beim Zurückklappen der Rückenlehne abgestützt werden. Bei den bekannten Fahrzeugsitzen dieser Art kann jedoch die Rückenlehne üblicherweise nicht vollständig in eine horizontale Liegeposition gebracht werden und auch die Liegefläche derartiger Fahrzeugsitze ist beschränkt.

Aufgabe der Erfindung ist es, einen Fahrzeugsitz der eingangs genannten Art zu schaffen, der in eine vollständige horizontale Liegeposition gebracht werden kann und eine erweiterte Liegefläche ermöglicht.

Diese Aufgabe wird durch einen Fahrzeugsitz mit den Merkmalen des Anspruchs 1 gelöst. Vorteilhafte Ausgestaltungen der Erfindung sind in den Unteransprüchen angegeben.

Der erfindungsgemäße Fahrzeugsitz enthält ein Sitzteil mit einem auf einem Traggestell angeordneten Sitzpolster und eine an dem Traggestell des Sitzteils schwenkbar angeordnete Rückenlehne mit einem Rückengestell und einem auf dem Rückengestell angeordneten Rückenpolster. Das Rückengestell der Rückenlehne ist zwischen einer Sitzposition und einer horizontalen Liegeposition verschwenkbar an dem Traggestell des Sitzteils angelenkt und das Rückenpolster der Rückenlehne ist an dem Rückengestell gegenüber diesem über eine Linearführung verschiebbar angeordnet. Durch die verschiebbare Anordnung des Rückenpolsters an dem Rückengestell kann das Rückenpolster zwischen einer nach dem Herunterklappen des Rückengestells in die Liegestellung von dem Sitzpolster beabstandeten Position in eine an dem Sitzpolster unmittelbar anliegende Position verschoben werden, um eine durchgehende spaltfreie horizontale Liegefläche zwischen dem Sitzpolster und dem Rückenpolster zu erreichen. Wird das Rückengestell wieder in die Sitzposition hochgeklappt, wird das Rückenpolster automatisch wieder zurückgeschoben, so dass es in der Sitzposition mit seinem unteren Ende zur Auflage auf dem Sitzpolster gelangen kann. Wird die Rückenlehne in der Liegeposition an das Sitzpolster herangeschoben, entsteht an dem hinteren Ende des Rückengestells eine freie Auflagefläche, auf die eine Zusatzpolster aufgelegt werden kann. Dadurch kann der Fahrzeugsitz mit einfachen Mitteln zu einem Liegesitz mit vergrößerter und spaltfreier durchgängiger Liegefläche umfunktioniert werden.

Die Linearführung kann z.B. an dem Rückengestell angeordnete erste Führungselemente und dazu korrespondierende zweite Führungselemente zur Verbindung mit dem Rückenpolster enthalten. In einer stabilen und fertigungstechnisch vorteilhaften Ausführung können die ersten Führungselemente als Führungsschienen mit einer z.B. als Langloch ausgebildeten Führungsnut und die zweiten Führungselemente als innerhalb der Führungsnut geführte Stifte oder Führungsbuchsen ausgebildet sein. Die eine Verschiebung des Rückenpolsters gegenüber dem Rückengestell des Fahrzeugsitzes ermöglichende Linearführung zum kann aber auch auf andere Weise ausgestaltet sein.

Die Führungsschienen der Linearführung können zweckmäßigerweise an dem Rückengestell, z.B. an den Ecken zwischen Querstreben und Tragprofilen des Rückengestells, befestigt sein.

An der Vorderseite des Sitzteils ist vorzugsweise eine Fußablage zwischen einer heruntergeklappten Einklappstellung und einer hochgeklappten Liegestellung schwenkbar angeordnet. Dadurch kann eine weitere Vergrößerung der Liegefläche erreicht werden. An dem Rückenstell der Rückenlehne kann außerdem eine ausziehbare Kopfstütze angeordnet sein.

Die Kopfstütze kann über zwei parallele stangenförmige Kopfstützenführungen in der Höhe verstellbar und bei Bedarf demontierbar in dem Rückengestells geführt sein. Wenn die Kopfstütze demontiert und die Rückenlehne in der Liegeposition an das Sitzpolster herangeschoben wird, entsteht an dem hinteren Ende des Rückengestells eine freie Auflagefläche, auf die eine Zusatzpolster aufgelegt werden kann. Die Kopfstütze kann aber auch über zueinander parallele Tragstützen in zwei randseitigen Tragprofilen des Rückengestells verschiebbar geführt sein. Wenn die Tragstützen der Kopfstütze ausreichend lang sind, kann die Kopfstütze relativ weit ausgezogen werden, sodass die Tragstützen als Auflage für ein Zusatzpolster zur Vergrößerung der Liegefläche dienen können.

In der Sitzposition sind die Tragstützen vorzugsweise vollständig in den Tragprofilen eingeführt. Durch die Kopfstütze wird somit das Sitzgrundgestell versteift. Dadurch ist es möglich, am Grundgestell des Sitzes Material einzusparen.

Die an der Rückseite der Rückenlehne angeordneten Tragprofile können in einer konstruktiv einfachen und dennoch stabilen Ausführung als Hohlprofile und die Tragstützen der Tragkonstruktion als in den Hohlprofilen verschiebbar geführte Tragstangen ausgebildet sein. Die Führung der Tragkonstruktion der Kopfstütze an der Rückenlehne kann aber auch auf andere Weise erfolgen.

Zweckmäßigerweise entspricht die Länge der beiden Tragprofile und die Länge der beiden in den Tragprofilen verschiebbar angeordneten Tragstützen im Wesentlichen der Länge des Rückenpolsters, sodass die Kopfstütze relativ weit ausgezogen werden kann und die Tragkonstruktion der Kopfstütze somit eine große Auflagefläche für das Zusatzpolster bietet. Der Abstand zwischen den beiden zueinander parallelen Tragstützen entspricht im Wesentlichen der Breite des Sitzpolsters, sodass ein Zusatzpolster mit derselben Breite wie das Sitzpolster gut abgestützt werden kann. Zur besonders stabilen Halterung des Zusatzpolsters kann dieses einen Lattenrost oder eine Halterung zur Befestigung auf den Tragstützen der Tragkonstruktion aufweisen.

Das Zusatzpolster kann zweckmäßigerweise über einen Klettverschluss, einen Haltegurt oder dgl. lösbar an der Rückseite der Rückenlehne befestigbar sein. Dadurch ist das Zusatzpolster gut verstaut und kann beim Umbau zum Liegesitz einfach abgenommen und auf die Tragkonstruktion aufgelegt werden.

Weitere Besonderheiten und Vorzüge der Erfindung ergeben sich aus der folgenden Beschreibung bevorzugter Ausführungsbeispiele anhand der Zeichnungen. Es zeigen:
- **Figur 1**: ein erstes Ausführungsbeispiel eines erfindungsgemäßen Fahrzeugsitzes in einer Seitenansicht;
- **Figur 2**: eine Perspektivansicht des in Figur 1 gezeigten Fahrzeugsitzes mit heruntergeklapptem Rückenteil und durchsichtig dargestelltem Rückenpolster;
- **Figur 3**: den in Figur 1 gezeigten Fahrzeugsitz mit heruntergeklapptem Rückenteil und durchsichtig dargestelltem Rückenpolster;
- **Figur 4**: eine Detailansicht des Bereichs A von Figur 2;
- **Figur 5**: eine Seitenansicht des in Figur 1 gezeigten Fahrzeugsitzes mit heruntergeklapptem Rückenteil, hochgeklappter Fußablage, entnommener Kopfstütze und Zusatzpolster in einer ersten Liegestellung;
- **Figur 6**: eine Seitenansicht des Fahrzeugsitzes von Figur 1 mit heruntergeklapptem Rückenteil, hochgeklappter Fußablage, ausgezogener Kopfstütze und Zusatzpolster in einer zweiten Liegestellung;
- **Figur 7**: ein zweites Ausführungsbeispiel eines erfindungsgemäßen Fahrzeugsitzes in einer Perspektivansicht und
- **Figur 8**: den Fahrzeugsitz von Figur 7 in einer Seitenansicht.

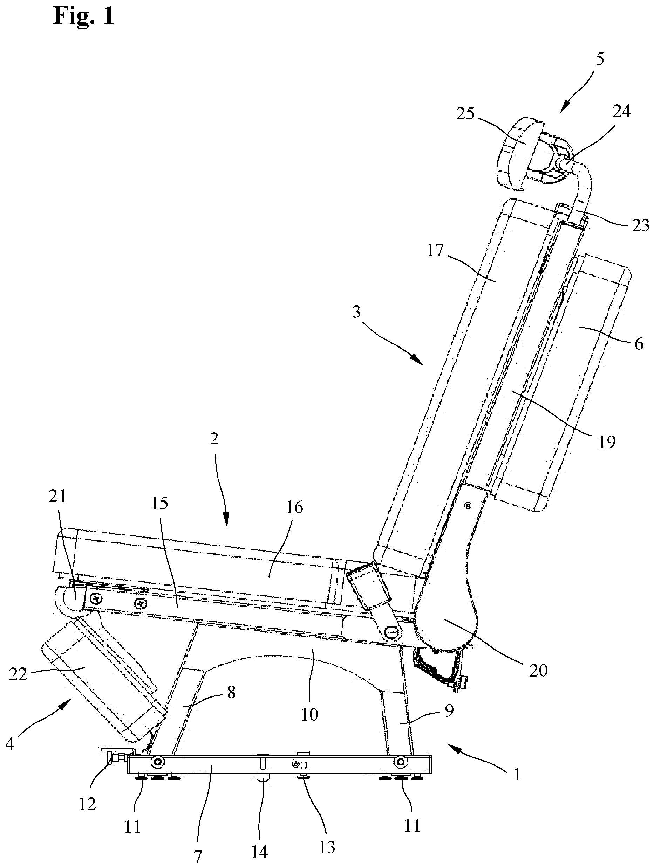

In Figur 1 ist ein in einer Sitzstellung befindlicher Fahrzeugsitz eines Kraftfahrzeugs in einer Seitenansicht gezeigt. Der gezeigte Fahrzeugsitz weist ein auf einem Untergestell 1 angeordnetes Sitzteil 2, eine an der Rückseite des Sitzteils 2 schwenkbar angeordnete Rückenlehne 3 und eine an der Vorderseite des Sitzteils 2 klappbar angeordnete Fußstütze 4 auf. An der Rückenlehne 3 ist eine in der Höhe verstellbare Kopfstütze 5 angebracht. Außerdem kann an der Rückseite der Rückenlehne 3 ein im Folgenden noch näher erläutertes Zusatzpolster 6 lösbar gehalten sein.

Das Untergestell 1 enthält in der gezeigten Ausführung zwei zueinander parallele schienenförmige Fußteile 7, zwei von den Fußteilen 7 schräg nach oben verlaufende vordere und hintere Stützen 8 bzw. 9 und ein oberes Verbindungsstück 10 zwischen den Stützen 8 und 9, auf dem das Sitzteil 2 angeordnet ist. Wie aus Figur 1 ersichtlich ist, sind an den Fußteilen 7 mehrere nach unten ragende Führungsteile 11 zum Eingriff in T-förmige Führungsnuten einer Bodenschiene angeordnet. An den Fußteilen 7 sind außerdem durch einen Verstellmechanismus 12 quer zu den Fußteilen 7 in entgegengesetzten Richtungen anheb- und absenkbare Spannelemente 13 und bolzenförmige Arretierelemente 14 zur Verschiebung oder sicheren Halterung des Untergestells 1 in einer gewünschten Stellung vorgesehen.

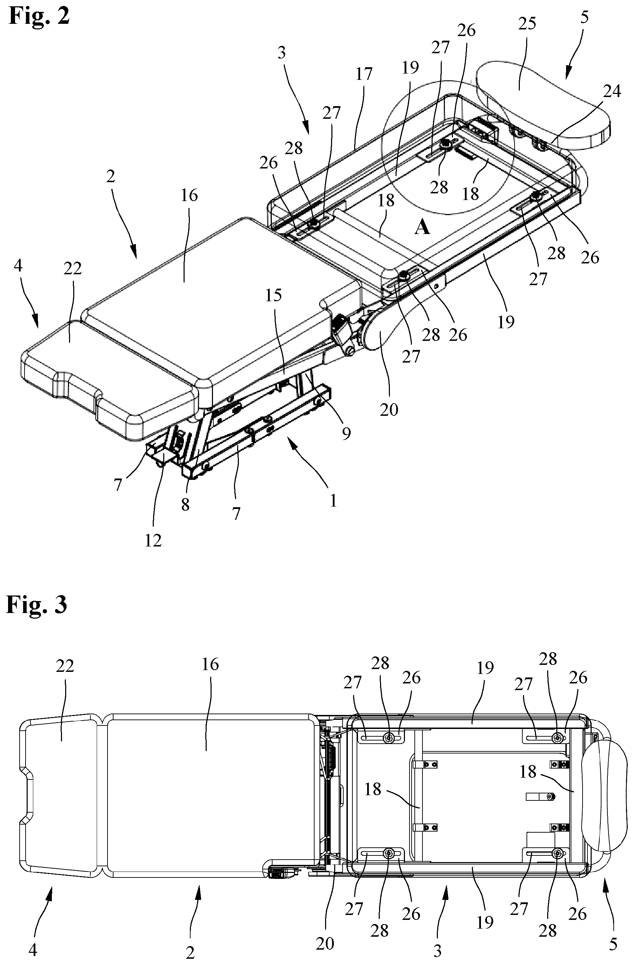

Das auf dem Untergestell 1 angeordnete Sitzteil 2 umfasst ein Traggestell 15 und ein auf dem Traggestell 15 angeordnetes Sitzpolster 16. Die Rückenlehne 3 enthält ein Rückengestell und ein auf diesem angeordnetes Rückenpolster 17. In Figur 2, in der das Rückenpolster 17 zur besseren Erkennbarkeit des Rückengestells durchsichtig dargestellt ist, und aus Figur 3, die eine Draufsicht des Fahrzeugsitzes mit dem in eine horizontale Liegestellung verschwenkten Rückengestell und weggelassenem Rückenpolster zeigt, ist erkennbar, dass das Rückengestell zwei durch Querstreben 18 miteinander verbundene parallele Tragprofile 19 enthält, die über der gesamten Höhe des Rückenpolsters 17 an dessen Längsseiten randseitig verlaufen. Die Tragprofile 19 sind bei der gezeigten Ausführung als Hohlprofilrohre mit einem quadratischen Querschnitt ausgeführt. Das durch die Querstreben 18 und die Tragprofile 19 gebildete Rückengestell ist über ein Gelenk 20 schwenkbar an dem Traggestell 15 des Sitzteils 2 angelenkt und kann zwischen einer in Figur 1 gezeigten Sitzstellung und einer in den Figuren 2 und 3 gezeigten, nach hinten geklappten horizontalen Liegestellung stufenlos geschwenkt werden.

Die Fußstütze 4 enthält ein über eine Scharnieranordnung 21 an dem Traggestell 15 schwenkbar angeordnetes Fußpolster 22, das zwischen einer in Figur 1 gezeigten Einklappstellung und einer in den Figuren 2 und 3 gezeigten hochgeklappten horizontalen Liegestellung geschwenkt werden kann. Die Kopfstütze 5 ist bei dem gezeigten Ausführungsbeispiel über eine aus einer Rundstange oder einem Rohr gebogene bügelförmige Tragkonstruktion verstellbar an der Rückenlehne angebracht. Wie besonders aus Figur 1 ersichtlich ist, enthält die aus einer Rundstange oder einem Rohr gebogene bügelförmige Tragkonstruktion der Kopfstütze 5 bei der dort gezeigten Ausführung zwei in den beiden randseitigen Tragprofilen 19 der Rückenlehne 3 verschiebbar geführte parallele Tragstützen 23 und eine dazu rechtwinklige Verbindungstütze 24. An der Verbindungsstütze 24 kann ein Kopfstützenpolster 25 der Kopfstütze 5 um die Längsachse der Verbindungstütze 24 schwenkbar angeordnet sein. Durch die Tragkonstruktion 21 mit den beiden in den Tragprofilen 19 der Rückenlehne 3 verschiebbar geführten parallelen Tragstützen 23 kann die Tragkonstruktion zusammen mit dem Kopfstützenpolster 25 in der Höhe verstellt und bei Bedarf auch vollständig entnommen werden.

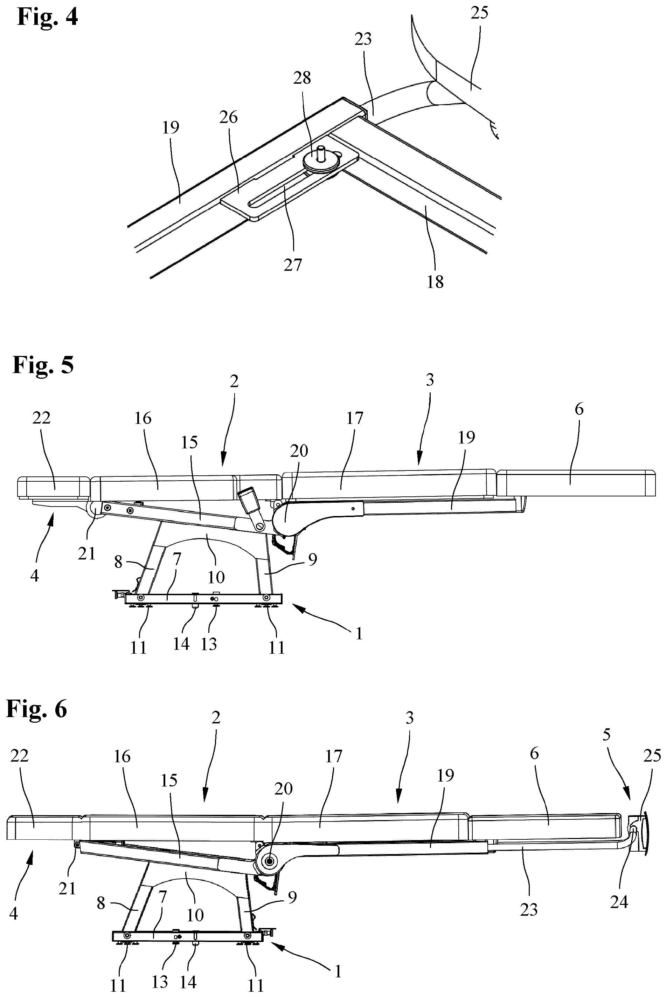

Das Rückenpolster 17 ist gegenüber dem Rückengestell über eine in den Figuren 2 bis 4 dargestellte Linearführung verschiebbar. Dadurch kann das Rückenpolster 17 zwischen einer nach dem Herunterklappen des Rückengestells in die Liegestellung von dem Sitzpolster 16 beabstandeten Position gemäß Figur 2 in eine an dem Sitzpolster 16 unmittelbar anliegende Position gemäß Figur 5 verschoben werden, um eine durchgehende spaltfreie horizontale Liegefläche zwischen dem Sitzpolster 16 und dem Rückenpolster 17 zu erreichen. Wird das Rückengestell wieder in die Sitzposition hochgeklappt, wird das Rückenpolster 17 automatisch wieder zurückgeschoben, so dass es in der in Figur 1 gezeigten Sitzposition mit seinem unteren Ende zur Auflage auf dem Sitzpolster 16 gelangen kann.

Wie aus den Figuren 2 bis 4 hervorgeht, weist die Linearführung miteinander korrespondierende Führungselemente zur verschiebbaren Führung des Rückenpolsters 17 an dem Rückengestell auf. Bei der gezeigten Ausführung ist die Linearführung als Schiebeführung mit Führungsschienen 26 und darin angeordneten Führungsnuten 27 als erste Führungselemente und innerhalb der Führungsnuten 27 verschiebbar geführten Führungsstiften oder Führungsbuchsen 28 als zu den ersten Führungselementen korrespondierende zweite Führungselemente ausgeführt. Die Führungsschienen 26 sind an den vier Ecken des Rückengestells angeordnet und als Führungsbleche ausgeführt. Die Führungsnuten 27 sind als Langlöcher ausgeführt und verlaufen parallel zu den Tragprofilen 19 des Rückengestells. Die in den Führungsnuten 27 verschiebbar geführten Führungsbuchsen 28 sind zur Verbindung mit dem Rückenpolster 17 ausgeführt. Die Führungsschienen 26 können an den Ecken zwischen den Querstreben 18 und den zueinander parallelen Tragprofilen 19 des Rückengestells festgeschweißt oder auf andere geeignete Weise befestigt sein. Die Führungsbuchsen 28 können z.B. aus einem stabilen Kunststoff oder einem anderen geeigneten Material mit guten Gleiteigenschaften hergestellt sein.

Wenn die Rückenlehne 3 des vorstehend beschriebenen Fahrzeugsitzes in die horizontale Liegeposition geschwenkt, die Kopfstütze 5 vollständig entnommen und das Rückenpolster 17 über die Linearführung zur Anlage gegen das Sitzpolster 16 verschoben wird, kann auf den dann freien hinteren Teil der Rückengestells das Zusatzpolster 6 mit seiner einen Seite aufgelegt werden, wie dies in Figur 5 gezeigt ist. Die andere Seite des Zusatzpolsters 6 kann auf einer nicht dargestellten Auflage innerhalb des Fahrzeugs abgestützt werden. Dadurch ist eine durchgehende und ausreichend lange Liegefläche ohne störende Spalte oder Unterbrechungen erreichbar.

Die Länge der beiden in den Tragprofilen 19 verschiebbar angeordneten Tragstützen 23 der Kopfstütze 5 kann aber auch so an die Abmessungen des Zusatzpolsters 6 angepasst sein, dass die Tragstützen 23 der Kopfstütze 5 relativ weit ausgezogen und das Zusatzpolster 6 auf den freien hinteren Teil des Rückengestells und die ausgezogenen Tragstützen 23 aufgelegt werden kann, wie dies in Figur 6 gezeigt ist. Wie auch bei der Ausführung von Figur 5 kann hier zunächst die Rückenlehne 3 nach hinten in eine horizontale Liegestellung geklappt und die an der Vorderseite des Sitzteils 2 angeordnete Fußstütze 4 nach oben in eine horizontale Position gebracht werden. Anschließend können die Tragstützen 23 zusammen mit der Kopfstütze 5 weit über die normale Einfahrstellung in der üblichen Sitzstellung hinaus nach hinten ausgezogen werden und das an der Rückseite der Rückenlehne 3 angeordnete Zusatzpolster 6 kann auf die ausgezogenen Tragstützen 23 der Kopfstütze 5 aufgelegt werden. Der Abstand zwischen den beiden zueinander parallelen Tragstützen 23 entspricht im Wesentlichen der Breite des Sitzpolsters 17, sodass die beiden Tragstützen 23 eine gute Auflage für das Zusatzpolster 6 ermöglichen. Das Zusatzpolster 6 weist dieselbe Höhe wie das Sitzpolster 16, das Rückenpolster 17 und das Fußpolster 22 auf, sodass sich in der in Figur 6 gezeigten Liegestellung eine durchgehende Liegefläche ergibt.

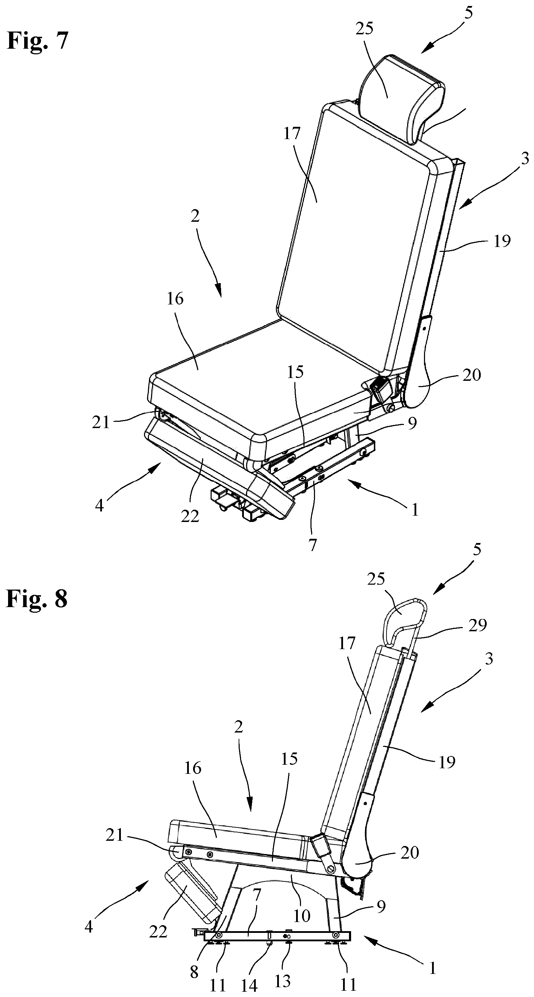

In den Figuren 7 und 8 ist ein weiteres Ausführungsbeispiel eines erfindungsgemäßen Fahrzeugsitzes gezeigt. Im Unterschied zu der vorher beschriebenen Ausführung ist hier die Kopfstütze 5 wie bei Autositzen üblich über zwei parallele stangenförmige Kopfstützenführungen 29 in der Höhe verstellbar und herausziehbar in dem Rückengestell geführt. Die beiden stangenförmigen Kopfstützenführungen weisen einen geringeren Abstand als bei der in Figur 1 gezeigten Ausführung auf. Ansonsten entspricht der Aufbau des Fahrzeugsitzes im Wesentlichen dem Aufbau des Fahrzeugsitzes von Figur 1, so dass einander entsprechende Bauteile mit denselben Bezugszeichen versehen sind. Wird die Rückenlehne 3 bei dem gezeigten weiteren Ausführungsbeispiel in die horizontale Liegeposition geschwenkt, die Kopfstütze 5 vollständig entnommen und das Rückenpolster 17 über die Linearführung zur Anlage gegen das Sitzpolster 16 verschoben, kann auch bei dieser Ausführung auf den dann freien hinteren Teil des Rückengestells das Zusatzpolster 6 mit seiner einen Seite aufgelegt werden, wie dies in Figur 5 gezeigt ist.

### Bezugszeichenliste

- 1: Untergestell
- 2: Sitzteil
- 3: Rückenlehne
- 4: Fußstütze
- 5: Kopfstütze
- 6: Zusatzpolster
- 7: Fußteil
- 8: Vordere Stütze
- 9: Hintere Stütze
- 10: Verbindungsstück
- 11: Führungselement
- 12: Verstellmechanismus
- 13: Spannelement
- 14: Arretierelement
- 15: Traggestell
- 16: Sitzpolster
- 17: Rückenpolster
- 18: Querstrebe
- 19: Tragprofil
- 20: Gelenk
- 21: Scharnieranordnung
- 22: Fußpolster
- 23: Tragstütze
- 24: Verbindungsstütze
- 25: Kopfstützenpolster
- 26: Führungsschiene
- 27: Führungsnut
- 28: Führungsbuchse
- 29: Kopfstützenführungen

## Patentansprüche

1. Fahrzeugsitz, der ein Sitzteil (2) mit einem auf einem Traggestell (15) angeordneten Sitzpolster (16) und eine an dem Traggestell (15) des Sitzteils (2) schwenkbar angeordnete Rückenlehne (3) mit einem Rückengestell (18, 19) und einem auf den Rückengestell (18, 19) angeordneten Rückenpolster (17) enthält, **dadurch gekennzeichnet, dass** das Rückengestell (18, 19) der Rückenlehne (3) zwischen einer Sitzposition und einer horizontalen Liegeposition verschwenkbar an dem Traggestell (15) des Sitzteils (2) angelenkt ist und dass das Rückenpolster (17) der Rückenlehne (3) an dem Rückengestell (18, 19) gegenüber diesem über eine Linearführung (26, 27, 28) verschiebbar angeordnet ist.

2. Fahrzeugsitz nach Anspruch 1, **dadurch gekennzeichnet, dass** die Linearführung (26, 27, 28) an dem Rückengestell (18,19) angeordnete erste Führungselemente (26, 27) und dazu korrespondierende zweite Führungselemente (28) zur Verbindung mit dem Rückenpolster (17) enthält.

3. Fahrzeugsitz nach Anspruch 2, **dadurch gekennzeichnet, dass** die ersten Führungselemente (26, 27) als Führungsschienen (26) mit einer darin angeordneten Führungsnut (27) und die zweiten Führungselemente als innerhalb der Führungsnut (27) geführte Stifte oder Führungsbuchsen (28) ausgebildet sind.

4. Fahrzeugsitz nach Anspruch 3, **dadurch gekennzeichnet, dass** die Führungsnut (27) als Langloch in der Führungsschiene (26) ausgeführt ist.

5. Fahrzeugsitz nach Anspruch 3 oder 4, **dadurch gekennzeichnet, dass** die Führungsschienen (26) an dem Rückengestell (18, 19) der Rückenlehne (3) befestigt sind.

6. Fahrzeugsitz nach einem der Ansprüche 1 bis 5, **dadurch gekennzeichnet, dass** an der Vorderseite des Sitzteils (2) eine Fußablage (4) zwischen einer heruntergeklappten Einklappstellung und einer hochgeklappten Liegestellung schwenkbar angeordnet ist.

7. Fahrzeugsitz nach einem der Ansprüche 1 bis 6, **dadurch gekennzeichnet, dass** an dem Rückenstell (18, 19) der Rückenlehne (3) eine ausziehbare Kopfstütze (5) angeordnet ist.

8. Fahrzeugsitz nach Anspruch 7, **dadurch gekennzeichnet, dass** die Kopfstütze (5) über zwei parallele stangenförmige Kopfstützenführungen (29) in der Höhe verstellbar und herausziehbar in dem Rückengestells (18, 19) geführt ist.

9. Fahrzeugsitz nach Anspruch 7, **dadurch gekennzeichnet, dass** die Kopfstütze (5) über zueinander parallele Tragstützen (23) in zwei randseitigen Tragprofilen (19) des Rückengestells (18, 19) verschiebbar geführt ist.

10. Fahrzeugsitz nach Anspruch 9, **dadurch gekennzeichnet, dass** die Tragprofile (19) als Hohlprofile und die Tragstützen (23) als in den Hohlprofilen verschiebbar geführte Tragstangen ausgebildet sind.

11. Fahrzeugsitz nach Anspruch 9 oder 10, **dadurch gekennzeichnet, dass** die Länge der Tragprofile (19) und die Länge der Tragstützen (23) im Wesentlichen der Länge des Rückenpolsters (17) entspricht.

12. Fahrzeugsitz nach einem der Ansprüche 9 bis 11, **dadurch gekennzeichnet, dass** der Abstand zwischen den beiden Tragstützen (23) im Wesentlichen der Breite des Rückenpolsters (17) entspricht.

13. Fahrzeugsitz nach einem der Ansprüche 9 bis 11, **dadurch gekennzeichnet, dass** an der Rückseite des Rückengestells (18, 19) ein Zusatzpolster (6) lösbar befestigt ist.

14. Fahrzeugsitz nach einem der Ansprüche 1 bis 13, **dadurch gekennzeichnet, dass** das Sitzteil (2) auf einem Untergestell (1) angeordnet ist.

15. Fahrzeugsitz nach Anspruch 14, **dadurch gekennzeichnet, dass** das Untergestell (1) zwei zueinander parallele schienenförmige Fußteile (7), zwei von den Fußteilen (7) schräg nach oben verlaufende vordere und hintere Stützen (8, 9) und ein oberes Verbindungsstück (10) zwischen den Stützen (8, 9) enthält.

16. Fahrzeugsitz nach Anspruch 15, **dadurch gekennzeichnet, dass** an der Unterseite der schienenförmigen Fußteile (7) durch einen Verstellmechanismus (12) in entgegengesetzte Richtungen bewegbare Spannelemente (13) und Arretierelemente (14) angeordnet sind.
